# EUROPÄISCHE PATENTSCHRIFT

(11) **EP 0 821 718 B1**
(45) Veröffentlichungstag und Bekanntmachung des Hinweises auf die Patenterteilung: **28.06.2000**
(21) Anmeldenummer: 96913492.3
(22) Anmeldetag: 09.04.1996
(51) Int. Cl.: C09K 3/10, C08K 5/103, C09J 175/04

(54) **FEUCHTIGKEITSHÄRTENDE MASSE**
MOISTURE-CURING SEALING AND BONDING COMPOUND
MATERIAU DURCISSANT A L'HUMIDITE

(30) Priorität: 15.04.1995 DE 19514265
(43) Veröffentlichungstag der Anmeldung: 04.02.1998
(73) Patentinhaber: Henkel Kommanditgesellschaft auf Aktien, 40191 Düsseldorf (DE)
(72) Erfinder: ERNST, Wolfgang, D-40589 Düsseldorf (DE); MAJOLO, Martin, D-41812 Erkelenz (DE); KLEIN, Johann, D-40233 Düsseldorf (DE); DZIALLAS, Michael, D-42781 Haan (DE); PODOLA, Tore, D-40789 Monheim (DE)
(86) Internationale Anmeldenummer: EP9601512
(87) Internationale Veröffentlichungsnummer: WO9633249

(56) Entgegenhaltungen:
- EP-A- 0 457 088
- DE-A- 2 220 401
- DE-A- 3 726 547
- DE-A- 3 943 090
- DE-A- 4 032 843
- DATABASE WPI Week 9429 Derwent Publications Ltd., London, GB; AN 94-238640 XP002009358 & JP,A,06 172 163 (SEKISUI CHEM IND.)
- DATABASE WPI Week 9332 Derwent Publications Ltd., London, GB; AN 93-253930 XP002009359 & JP,A,05 174 653 (HITACHI CHEM)
- CHEMICAL ABSTRACTS, vol. 120, no. 10, 7.März 1994 Columbus, Ohio, US; abstract no. 109227, SHINTANI ET AL.: "two-component polyurethane adhesive compositions" XP002009357 & JP,A,05 263 061 (TAKAO CHEMICAL CO LTD )

## Beschreibung

Die Erfindung betrifft eine feuchtigkeitshärtende Masse zum Dichten und Kleben auf der Basis eines vollsynthetischen Polymeren sowie seine Herstellung und Verwendung.

Feuchtigkeitshärtende Dichtungsmassen auf Polyurethanbasis sind dem Fachmann gut bekannt z.B. aus der DE 37 26 547 und der DE 39 43 090. Dort bestehen sie im wesentlichen aus Polyurethanprepolymeren mit endständigen Isocyanatgruppen. Die Standfestigkeit von Fugendichtungsmassen wurde durch den Zusatz von feinteiligen Feststoffen - auch Füllstoffe genannt - erzielt. Diese tragen im allgemeinen wesentlich dazu bei, daß die Dichtungsmasse nach der Anwendung einen notwendigen inneren Halt besitzt, so daß ein Auslaufen oder Ausbuchten der Dichtungsmasse aus senkrechten Fugen verhindert wird. Die genannten Zusatz- bzw. Füllstoffe lassen sich in Pigmente und thixotropierende Füllstoffe, auch verkürzt als Thixotropiermittel bezeichnet, einteilen. Bei den Fugendichtungsmassen auf der Basis von Polyurethanprepolymeren müssen an diese Thixotropiermittel zusätzliche Anforderungen gestellt werden. Beispielsweise sollen unerwünschte Reaktionen mit den Isocyanatgruppen ausgeschlossen sein. Daher kommen als Thixotropiermittel im wesentlichen quellfähige Polymerpulver in Betracht. Beispiele sind hierfür Polyacrylnitril, Polyurethan, Polyvinylchlorid, Polyacrylsäureester, Polyvinylalkohole, Polyvinylacetate sowie die entsprechenden Copolymerisate. Besonders gute Ergebnisse lassen sich mit feinteiligem Polyvinylchloridpulver erhalten.

Die Eigenschaft der Polyurethan-Fugendichtungsmasse läßt sich noch weiter verbessern, wenn dem als Thixotropiermittel verwendeten Kunststoffpulver weitere Komponenten zugesetzt werden. Dabei handelt es sich um Stoffe, die unter die Kategorie der für Kunststoffe angewendeten Weichmacher bzw. Quellmittel und Quellhilfsmittel fallen. Dabei ist es jeweils notwendig, die optimale Zusammensetzung der Systeme Prepolymer/Kunststoffpulver/Weichmacher/Quellhilfsmittel zu bestimmen. So dürfen z.B. Weichmacher und Quellhilfsmittel nicht mit den Isocyanatgruppen des Prepolymer reagieren. Es kommen somit z.B. für Polyvinylchloridpulver als Thixotropiermittel Weichmacher aus der Klasse der Phthalsäureester in Betracht. Beispiele für anwendbare Verbindungen aus dieser Substanzklasse sind Dioctylphthalat, Dibutylphthalat und Benzylbutylphthalat. Weitere Substanzklassen, die die geforderten Eigenschaften erfüllen, sind Chlorparaffine, Alkylsulfonsäureester etwa der Phenole oder Kresole sowie Fettsäureester. Es sind insbesondere Weichmacher auf der Basis von Alkylsulfonsäureestern und Polyvinylchlorid als quellfähiges Polymerpulver bevorzugt.

Mit diesen bekannten Mitteln wird zwar in der Regel eine ausreichende Standfestigkeit erzielt, jedoch könnte sie in bestimmten Fällen besser sein, z. B. bei breiten Fugen oder bei hoher Temperatur. Zusätzlich ist es aus Umweltgründen erstrebenswert, PVC völlig zu ersetzen.

Auch bei Klebstoffen gibt es Anwendungen, bei denen die aufgetragene Form möglichst erhalten bleiben soll, z.B. beim Verkleben in Raupenform an senkrechten Wänden oder beim Auftragen von Fußbodenklebstoffen mit einem Zahnspachtel.

Es ist auch bekannt, das Standvermögen von Dichtungsmassen durch Vernetzungsreaktionen von reaktiven Triglyceriden zu verbessern. So wird in der DE-A-2 220 401 eine härtende Dichtungsmasse auf der Grundlage von Polyalpha-olefinen beschrieben, deren Härtung auf trocknenden Glyceriden beruht. In der JP-A-5 263 061 wird eine zweikomponentige Polyurethan-Dichtungsmasse beschrieben, wobei als Polyol Glyceride mit OH-Gruppen verwendet werden. Wegen der chemischen Vernetzung werden duroplastische Massen erhalten.

Die erfindungsgemäße Aufgabe besteht demnach darin, diese Nachteile weitgehend zu vermeiden und, ohne daß dabei andere Verarbeitungsund Gebrauchseigenschaften leiden, das Standvermögen von Massen zum Dichten und Kleben zu verbessern.

Diese Aufgabe wird dadurch gelöst, daß die feuchtigkeitshärtenden Massen auf Basis von vollsynthetischen Polymeren mindestens ein Triglycerid ohne OH-Gruppen enthalten.
Vorzugsweise wird ein Triglycerid eingesetzt. Es können aber auch 2 oder 3 Triglyceride verwendet werden.

Als Triglyceride werden Ester des Glycerins bezeichnet, dessen 3 Hydroxy-Gruppen durch gleiche oder verschiedene Carbonsäuren verestert sind.

Vorzugsweise werden aliphatische Carbonsäuren mit nahezu ausschließlich unverzweigter Kohlenstoffkette und mit 8 bis 26, insbesondere mit 10 bis 22 C-Atomen eingesetzt. Diese Fettsäuren können ungesättigt sein, vorzugsweise sind sie jedoch gesättigt und haben außer den COOH-Gruppen keine weiteren funktionellen Gruppen.

Die Triglyceride sollen einen stabilen Schmelzpunkt von mindestens 40, vorzugsweise mindestens 50 °C haben und nicht über 90 °C liegen.

Konkrete Triglyceride sind demnach: Trimyristin, Tripalmitin, Tristearin, 1-Lauro-dimyristin, 1-Lauro-dipalmitin, 2-Lauro-dipalmitin, 1,3-Dicaprino-stearin, 2-Palmito-distearin, 1,2-Distearo-olein, 1,3-Distearo-olein, 1,3-Dipalmito-elaidin, 1-Stearo-dibehenin, 1-Lauro-2-myristo-3-palmitin, 1-Lauro-2-myristo-3-stearin. Weitere brauchbare Verbindungen sind die Triglyceride folgender Säuren: Laurinsäure, Behensäure und Elaidinsäure.

Die Triglyceride werden in einer Menge von 0,1 bis 50, vorzugsweise in einer Menge von 0,2 bis 30 und insbesondere von 0,5 bis 2 Gew.-% eingesetzt, bezogen auf die Masse insgesamt. Je höher die Konzentration des Triglycerids ist, um so mehr kann auf die üblichen Mittel zur Verbesserung der Standfestigkeit verzichtet werden. Ab 10, vorzugsweise ab 15 kann deren Anteil 0 % sein.

Bei den vollsynthetischen Polymeren handelt es sich um bekannte feuchtigkeitshärtende Polyurethane, Polysulfide, Polyether oder Silicone. Bei den feuchtigkeitsreaktiven Gruppen handelt es sich um Isocyanat- und/oder Siloxan-Gruppen.

Die erfindungsgemäßen feuchtigkeitshärtenden Massen enthalten vorzugsweise Polyurethanprepolymere mit im Mittel zwei oder mehr Isocyanatgruppen pro Molekül. Diese Polyurethanprepolymeren werden hergestellt durch Vermischen von Alkoholen der Funktionaliät 2 und größer mit einem Überschuß an Isocyanatgruppen der Funktionalität 2 und größer. Dabei können durch die Wahl der Einsatzmengen die Eigenschaften der Produkte beeinflußt werden.

Als Polyolkomponenten können sowohl niedermolekulare als auch hochmolekulare Verbindungen eingesetzt werden. Niedermolekulare Verbindungen, die als Polyolkomponenten für Polyurethanprepolymere verwendet werden können, sind beispielsweise Ethylenglycol, Propylenglycol, Neopentylglycol, 1,4-Butandiol, 1,6-Hexandiol sowie Triole wie Glycerin, Trimethylolpropan oder Trimethylolethan sowie höherfunktionelle Hydroxy-Verbindungen wie Pentaeritrit.

Als höhermolekulare Polyolkomponente werden in der Regel Polyetherpolyole und/oder Polyesterpolyole verwendet. Polyetherpolyole können durch Umsetzung eines Epoxyds oder Tetrahydrofurans mit einer niedermolekularen Polyolkomponente dargestellt werden, wobei als Epoxyd beispielsweise Ethylenoxyd, Propylenoxyd, Butylenoxyd, Styroloxyd, Cyclohexenoxyd, Trichlorbutylenoxyd und Epichlorhydrin und als Polyol z.B. Verbindungen wie Ethylen-, Diethylen- und Propylenglycol Verwendung finden.

Polyester als Ausgangsstoffe für Polyurethanprepolymere werden üblicherweise durch Umsetzung von Hydroxylverbindungen mit Carbonsäuren dargestellt. Als Hydroxylverbindungen können die bereits genannten niedermolekularen mehrfunktionellen Hydroxylkomponenten eingesetzt werden. Als Säurekomponente sind Verbindungen wie Adipinsäure, Phthalsäure, Oxalsäure, Maleinsäure, Bernsteinsäure, Glutarsäure, Acelainsäure, Sebacinsäure sowie Tricarbonsäuren geeignet. Auch durch ringöffnende Polymerisation von beispielsweise Epsilon-Caprolacton oder Methyl-epsilon-caprolacton lassen sich geeignete Polyester zur Darstellung von Polyurethanprepolymeren gewinnen. Neben Polyestern und Polyethern als Polyolkomponente können aber auch Naturstoffe, sogenannte oleochemische Polyole oder z.B. Rizinusöl eingesetzt werden.

Im Rahmen der Erfindung sind als Polyole Polyetherpolyole bevorzugt, insbesondere solche Polyetherpolyole, die durch Umsetzung von Glycerin, Propylenoxidaddukten und Polypropylenglycol dargestellt werden können.

Als Isocyanatkomponente können sowohl aromatische als auch aliphatische und/oder cycloaliphatische Isocyanate Verwendung finden. Geeignete Isocyanate mit einer Funktionalität von 2 und größer sind beispielsweise die Isomeren des Toluylendiisocyanats, Isophorondiisocyanat, Dicyclohexylmethandiisocyanat, Tetramethylendiisocyanat, Trimethylhexamethylendiisocyanat, Trimethylxyloldiisocyanat, Hexamethylendiisocyanat und Diphenylmethandiisocyanat oder auch Triisocyanate wie z.B. 4,4",4"-Triphenylmethantriisocyanat. Im Rahmen der Erfindung sind die aromatischen Diisocyanate, insbesondere technisches Diphenylmethan-4,4'-diisocyanat (MDI) und Toluylendiisocyanat-2,4 (TDI) bevorzugt.

In einer bevorzugten Ausführungsform wird das Polyurethanprepolymere durch Umsetzung eines Glycerin-propylenoxyd-adduktes und/oder eines Polypropylenglycols mit technischem Diphenylmethandiisocyanat und/oder technischem Toluylendiisocyanat hergestellt. Dabei wird bevorzugt das Isocyanat im Überschuß eingesetzt, so daß das gebildete Polyurethanprepolymere reaktive NCO-Gruppen enthält.

Zur Verbesserung der Langzeitstabilität gegenüber Witterungseinflüssen enthalten die Massen, insbesondere Fugendichtungsmassen reaktive Polysiloxane. Dabei handelt es sich um Polysiloxane, die in der Kette oder Seitenkette über zumindest eine - gegenüber isocyanatterminierten Dichtungsmassenbestandteilen und/oder den daraus infolge der Feuchtigkeitshärtung gebildeten Verbindungen - reaktionsfähige Gruppe verfügen. Dies sind beispielsweise epoxymodifizierte Polysiloxane, Polyhydrogenalkylsiloxane und/oder silanolmodifizierte Polysiloxane. Unter epoxymodifizierten Siloxanen versteht der Fachmann chemisch reaktive Silikonöle mit modifizierten Epoxyalkylseitengruppen. Desweiteren kann als reaktives Polysiloxan Polymethylwasserstoffsiloxan, auch Polymethylhydrogensiloxan genannt, enthalten sein. Silanolmodifizierte Siloxane sind Alkylsiloxanpolymere, die mindestens eine endständige Silanolgruppe besitzen. Diese sogenannten Silanolöle sind als reaktive Analoge der üblichen Silikonöle anzusehen. In den Fugendichtungsmassen ist bevorzugt hydroxyterminiertes Polydimethylsiloxan enthalten.

Die Standfestigkeit von Massen wird in der Regel durch Zusatz von feinteiligen Feststoffen erzielt. Durch den Aufbau einer inneren Struktur erhält der Dichtstoff nach dem Aufspritzen den notwendigen inneren Halt, so daß das Auslaufen oder Ausbuchten der Dichtstoffpaste aus senkrechten Fugen verhindert wird. Die genannten Zusatzstoffe werden daher auch häufig als thixotropierende Füllstoffe oder Thixotropiermittel bezeichnet. Bei Fugendichtungsmassen auf der Basis von Polyurethan-Prepolymeren müssen an die Thixotropiermittel zusätzliche Anforderungen gestellt werden. So müssen beispielsweise unerwünschte Reaktionen mit den Isocyanatgruppen ausgeschlossen sein. Daher kommen als Thixotropiermittel im wesentlichen anorganische Füllstoffe wie Kreide und Schwerspat oder quellfähige Polymer-Pulver in Betracht.

Beispiele hierfür sind Polyacrylnitril, Polyurethan, Polyvinylchlorid, Polyacrylsäureester, Polyvinylalkohole, Polyvinylacetate sowie die entsprechenden Copolymerisate. Besonders gute Egebnisse werden üblicherweise mit feinteiligem Polyvinylchlorid-Pulver erhalten.

Die Eigenschaft der Masse läßt sich noch weiter verbessern, wenn dem als Thixotropiermittel verwendeten Kunststoff-Pulver weitere Komponenten zugesetzt werden. Bei diesen Komponenten handelt es sich um Stoffe, die unter die Kategorien der für Kunststoffe angewendeten Weichmacher und Quellmittel fallen. Dabei ist es jeweils notwendig, die optimale Zusammenstellung der Systeme reaktives Polymer/Kunststoff-Pulver/Weichmacher-Quellhilfsmittel zu bestimmen. Dies wird für den Fachmann keine Schwierigkeiten bereiten. Zu den bei der Auswahl der Komponenten für solche Systeme üblicherweise anzustellenden Überlegungen kommt hier ledigloch die Bedingung hinzu, daß Weichmacher und Quellhilfsmittel nicht mit den reaktiven Gruppen des Polymeren reagieren dürfen. Somit kommen zum Beispiel für PVC als Thixotropiermittel Weichmacher aus der Klasse der Phthalsäureester in Betracht. Beispiele für aus dieser Substanzklasse anwendbare Verbindungen sind das Di-octyl-phthalat, das Dibutyl-phthalat und das Benzyl-butyl-phthalat. Weitere Substanzklassen, die die geforderten Eigenschaften erfüllen, sind Chlorparaffine, Alkylsulfonsäureestser von Phenol und Kresol sowie Fettsäureester. Besonders bevorzugt im Rahmen des erfindungsgemäßen Verfahrens sind Weichmacher auf der Basis eines Alkylsulfonsäureesters und Polyvinylchlorid als quellfähiges Polymer-Pulver.

Als Quellhilfsmittel sind solche niedermolekularen organischen Substanzen einsetzbar, die mit dem Polymerpulver und dem Weichmacher mischbar sind, aber mit den Isocyanatgruppen des Polyurethanprepolymeren nicht reagieren. Derartige Quellhilfsmittel lassen sich den einschlägigen Kunststoff- und Polymer-Handbüchern für den Fachmann entnehmen. Als bevorzugte Quellhilfsmittel für Polyvinylchloridpulver dienen Ester, Ketone, aliphatische Kohlenwasserstoffe, aromatische Kohlenwasserstoffe sowie aromatische Kohlenwasserstoffe mit Alkylsubstituenten. Die letztgenannten, insbesondere das Xylol, werden als bevorzugte Quellhilfsmittel für Polyvinylchloridpulver im Rahmen der Erfindung verwendet.

Als Pigmente und Farbstoffe in der erfindungsgemäßen Fugendichtungsmasse werden die für diese Verwendungszwecke bekannten Substanzen wie Titandioxid, Eisenoxide und Ruß verwendet.

Zur Verbesserung der Lagerstabilität werden bekanntermaßen den Fugendichtungsmassen Stabilisatoren wie Benzoylchlorid, Acetylchlorid, Toluolsulfonsäuremethylester, Carbodiimide und/oder Polycarbodiimide zugesetzt. Als besonders gute Stabilisatoren haben sich Olefine mit 8 bis 20 Kohlenstoffatomen erwiesen. Neben der stabilisierenden Wirkung können diese auch Aufgaben von Weichmachern bzw. Quellmitteln erfüllen. Bevorzugt werden Olefine mit 8 bis 18 Kohlenstoffatomen, insbesondere wenn die Doppelbindung in 1,2-Stellung angeordnet ist. Beste Ergebnisse erhält man, wenn die Molekülstruktur dieser Stabilisatoren linear ist.

Daneben können die erfindungsgemäßen Massen noch Katalysatoren wie Dibutylzinndilaurat, -diacetat und/oder Zinn(II)-octoat zur Reaktionsbeschleunigung in katalytisch wirksamen Mengen enthalten. Unter sonstigen Hilfsstoffen im Rahmen der erfindungsgemäßen Lehre sind beispielsweise Härter, Trockner und Haftvermittler zu verstehen.

Das in der erfindungsgemäßen Masse verwendete Gemisch aus feuchtigkeitsreaktiven Polymer, Füllstoff, Weichmacher, Quellhilfsmitteln, Pigmenten und Farbstoffen, reaktiven Polysiloxanen, Stabilisatoren sowie Katalysatoren und sonstigen Hilfsstoffen ist in Abhängigkeit von den im speziellen Fall an die Masse gestellten Anforderungen gezielt aufeinander abzustimmen.

Bevorzugt im Rahmen der erfindungsgemäßen Lehre sind solche Dichtungsmassen, insbesondere Fugendichtungsmassen, die 20 bis 40, insbesondere 25 bis 35 Gew.-% Polyurethanprepolymere, 0 bis 50, insbesondere 15 bis 35 Gew.-% eines Füllstoffes, insbesondere eines quellfähigen Polymerpulvers, 0 bis 35, insbesondere 20 bis 30 Gew.-% Weichmacher bzw. Quellmittel, 0 bis 10, insbesondere 3 bis 7 Gew.-% Quellhilfsmittel, 0 bis 10, insbesondere 4 bis 9 Gew.-% Pigmente und Farbstoffe, 0 bis 10, insbesondere 1 bis 5 Gew.-% Stabilisierungsmittel und 0 bis 12, insbesondere 1 bis 10 Gew.-% reaktive Polysiloxane und 0 bis 10, insbesondere 0,01 bis 2 Gew.-% Katalysatoren und sonstige Hilfsstoffe sowie 0,5 bis 50, insbesondere 1 bis 30 Gew.-% an Triglyceriden enthalten.

Die erfindungsgemäßen Klebstoffe basieren vor allem auf feuchtigkeitsreaktiven Polyurethanprepolymeren.

Bei der Herstellung der erfindungsgemäßen Massen zum Dichten und Kleben empfiehlt es sich, zunächst das Triglycerid mit ca. der gleichen Menge einer weiteren Komponente - z.B. einem Weichmacher, einem Extender, einem Hochsieder ... - unter Erwärmen zu homogenisieren, wobei Rühren nützlich sein kann, aber nicht notwendig ist. Die dabei erhaltene gelartige Mischung wird mit den restlichen Komponenten gemischt.

Zweckmäßigerweise wird die Masse dadurch hergestellt, daß man
- die Komponenten vorlegt und außer dem Katalysator, dem Haftvermittler und einem Teil - insbesondere 30 bis 60 % - des Prepolymeren,
- bei schnellaufendem Rührwerk unter Vakuum auf Temperaturen von ca. 5 °C über den Schmelzpunkt des Triglycerids erhitzt,
- die Masse langsam abkühlen läßt und
- den Rest des Prepolymeren sowie den Katalysator und den Haftvermittler zumischt und homogenisiert.

Bei der Herstellung der erfindungsgemäßen Fugendichtungsmasse ist es wichtig, folgendermaßen vorzugehen: Die Komponenten werden unter Ausschluß von Luftfeuchtigkeit in einem geeigneten Mischgerät, z.B. in einem beheiz- und evakuierbaren Planetendissolver gemischt und erhöhten Temperaturen ausgesetzt. Die maximale Temperatur liegt bis zu 5 °K über dem Schmelzpunkt des Triglycerids. Erst nach Abkühlen des Produkts wird zweckmäßigerweise der Katalysator zugemischt. Vor dem Abfüllen sollten die Produkte durch Verminderung des Drucks beispielsweise bis zu 20 mbar entgast werden.

Es war überraschend, daß bereits geringe Mengen an Fettsäuretriglycerid die Standfestigkeit bei 45 °C drastisch erhöhen. Ebenso überraschend war es, daß bei hohen Konzentrationen auf sonstige Standmittel ganz verzichtet werden kann. Ein weiterer Vorteil ist der niedrige Dehnspannungswert bei Temperaturen um -20 °C.

Überraschend ist auch, daß Schäume stabilisiert werden. Versetzt man z.B. einen erfindungsgemäßen PUR-Klebstoff mit Luft und evakuiert, so entsteht ein Klebstoff mit Schaumstruktur mit ca. dem 3fachen Volumen der festen Masse. Auch bei normalem Druck bleibt die Schaumstruktur erhalten. Das ist nicht der Fall, wenn kein Triglycerid hinzugefügt wurde.
Schließlich wurde beim erfindungsgemäßen PUR-Klebstoff der Fadenzug verkürzt. Damit sind Vorteile bei der Verarbeitung als spachtelbarer Klebstoff verbunden.

Durch den Zusatz eines Triglycerids gesättigter Fettsäuren zu PU-Dichtstoffen wird die Standfestigkeit besonders von breiten Fugen sowie von Über-Kopf-Fugen verbessert. Zusätzlich wird die Standfestigkeit bei Temperaturen über 40 °C verbessert, ohne daß die Verspritzbarkeit verschlechtert wird. Daher erhält man eine größere Sicherheit bei sommerlichen Temperaturen. Würde man die Standfestigkeit durch eine Erhöhung des PVC-Anteils und/oder Verminderung des Weichmacher-Anteils erzielen, so würde darunter die Verspritzbarkeit erheblich leiden. Außerdem wäre damit eine unerwünschte Erhöhung der Dehnspannungswerte verbunden, was bei den erfindungsgemäßen Fugendichtstoffen nicht der Fall ist.

Die erfindungsgemäße Lehre wird anhand folgender Beispiele näher erläutert:

### Beispiele

### Beispiel 1

### A) Komponenten der Fugendichtungsmasse

a) Bei dem Fettsäuretriglycerid handelt es sich um das Glycerinstearat Edenor-NHTi der Fa. Henkel KGaA.
b) Bei dem PVC-Pulver handelt es sich um das Produkt Solvic 373MC der Fa. Solvay.
c) Bei dem Weichmacher handelt es sich um Alkylsulfonsäureester mit dem Namen Mesamoll der Fa. Bayer.
d) Bei den Quellhilfsmitteln handelt es sich um Xylol.
e) Bei den Pigmenten handelt es sich um Titandioxid der Fa. Kronos Titan.
f) Bei den Viskositätsstabilisatoren handelt es sich um Olefine der Fa. Gulf.
g) Bei den UV-Schutzmitteln handelt es sich um Benzotriazolderivate mit dem Namen Tinuvin 328 der Fa. Ciba-Geigy.
h) Bei dem Katalysator handelt es sich um Dibutylzinndilaurat mit dem Namen Standere TL der Fa. Akzo.
i) Bei dem PU-Prepolymeren handelt es sich um ein Produkt der Fa. Sichel.

### B) Herstellung der Fugendichtungsmassen

Aus den obigen Komponenten in den unten angegebenen Mengen (in Gewichtsteilen) wurden auf folgende Weise die Fugendichtungsmassen A bis D hergestellt:

| **Komponenten** | **Fugendichtungsmassen** | | | |
|---|---|---|---|---|
| | A | B | C | D |
| Polyurethan-Prepolymer | 2500 | 2500 | 2500 | 2500 |
| Polyvinylchlorid-Pulver | 2900 | 2900 | 2900 | 2900 |
| Weichmacher | 2200 | 2200 | 2200 | 2200 |
| Pigmente | 1200 | 1200 | 1200 | 1200 |
| Quellhilfsmittel | 520 | 520 | 520 | 520 |
| Viskositätsstabilisator | 500 | 500 | 500 | 500 |
| UV-Schutzmittel | 80 | 80 | 80 | 80 |
| Katalysator | 1 | 1 | 1 | 1 |
| Fettsäuretriglycerid | 0 | 100 | 150 | 200 |

### C) Untersuchungen

Diese Dichtstoffe wurden folgenden Prüfungen unterworfen:
a) Dehnspannungswert nach DIN 52455-NWT-1-A2-100.
b) Standvermögen nach DIN 52454-ST-U26-70.
c) Standvermögen analog zu DIN 52454-ST-U26-70 mit folgenden Abweichungen:
   - 4-Profile mit den Abmessungen L:B:T = 250:50:25 mm
   - Hinterfüllmaterial ist nicht-fixiertes PE-Band
   - Dichtstoff, Verarbeitungspistole, U-Profile werden bei 45°C gelagert. Die Einbringung des Dichtstoffes in die Profile erfolgt bei 45 °C. Die U-Profile werden bei 45 °C senkrecht aufgehängt.

### D) Ergebnisse

standfest: Die Fugendichtungsmasse blieb völlig in der Fuge. Sie zeigte unten lediglich eine Ausbuchtung.
ausgelaufen: Die Fugendichtungsmasse war völlig aus der Fuge ausgelaufen.

| | **Dichtstoff** | **A** | **B** | **C** | **D** |
|---|---|---|---|---|---|
| **Prüfung** | | | | | |
| a) [N/mm²] | | 0,25 | 0,23 | 0,24 | 0,23 |
| b) [mm] | | <2 mm | <2 mm | <2 mm | <2 mm |
| c) | | ausgelaufen | standfest | standfest | standfest |

### Beispiel 2

### A) Die Komponenten

a) Als Entwässerungsmittel wurde eingesetzt Tosylisocyanat mit dem Namen Zusatzmittel TI der Fa. Bayer.
b) Als Silan-Haftvermittler wurde eingesetzt Glycidyloxypropyltrimethoxysilan mit dem Namen Silan A187 der Fa. Union Carbide.

Im übrigen waren die Komponenten identisch mit denen von Beispiel 1.

### B) Herstellung der erfindungsgemäßen Fugendichtungsmasse

Aus den in der folgenden Tabelle angegebenen Komponenten wurde ein Füllstoff hergestellt, dem alle Ausgangskomponenten in einem Vakuumplanetendissolver mit hoher Drehzahl dispergiert wurden, bis eine Mindesttemperatur von 50 °C erreicht wurde. Dann wurde entgast und abgefüllt.

| | |
|---|---|
| PU-Prepolymere | 14250 |
| TiO₂-Pigment | 1500 |
| UV-Schutzmittel | 170 |
| Entwässerungsmittel | 40 |
| Silan-Haftvermittler | 40 |
| Katalysator | 1 |
| Fettsäuretriglycerid | 4000 |

### C) Ergebnisse

Es wurde eine PVC-freie Dichtungsmasse mit folgenden technischen Daten erhalten, wobei nicht nur das Standvermögen, sondern auch der Dehnspannungswert nach Untersuchung Nr. 1 mit 0,11 N/mm² besonders bemerkenswert ist.

| | | |
|---|---|---|
| a) | Dehnspannungswert nach DIN 52455-NWT-1-A2-100 | 0,11 N/mm² |
| b) | Dehnspannungswert nach DIN 52455-WL-1-V6-100 | 0,48 N/mm² |
| c) | Standvermögen nach DIN 52454-ST-U26-50 | 1,5 mm |
| d) | Rückstellvermögen nach DIN 52458-BR-1-V6-150 | 83 % |
| e) | Bruchdehnung in Anlehnung an DIN 52455-NWT-1-A2 | >900 % |

## Patentansprüche

1. Feuchtigkeitshärtende Masse zum Dichten und Kleben auf Basis von vollsynthetischen Polymeren, die gewünschtenfalls Füllstoffe, Weichmacher und/oder weitere Additive enthält, dadurch gekennzeichnet, daß sie mindestens ein Triglycerid ohne OH-Gruppen enthält.

2. Masse nach Anspruch 1, dadurch gekennzeichnet, daß die Triglyceride einen Schmelzpunkt von mehr als 40 °C haben.

3. Masse nach den Ansprüchen 1 oder 2, dadurch gekennzeichnet, daß die Säurekomponenten in dem Triglycerid gleiche oder ungleiche gesättigte Fettsäuren mit 8 bis 26 C-Atomen ohne weitere funktionellen Gruppen außer der COOH-Gruppen sind.

4. Masse nach den Ansprüchen 1, 2 oder 3, gekennzeichnet durch mindestens ein Triglycerid aus folgender Gruppe: Trimyristin, Tripalmitin, 1-Laurodimyristin, 1-Lauro-dipalmitin, 2-Laurodipalmitin, 1,3-Dicaprino-stearin, 2-Palmito-distearin, 1,2-Distearo-olein, 1,3-Distearo-olein, 1,3-Dipalmito-elaidin, 1-Stearo-dibehenin, 1-Lauro-2-myristo-3-palmitin und 1-Lauro-2-myristo-3-stearin.

5. Masse nach mindestens einem der Ansprüche 1 bis 4, dadurch gekennzeichnet, daß sie das Triglycerid in einer Menge von 0,1 bis 50 Gew.-% enthalten, bezogen auf die Masse insgesamt.

6. Dichtungsmasse nach mindestens einem der Ansprüche 1 bis 5, dadurch gekennzeichnet, daß sie
- 0,5 bis 50 Gew.-% Triglycerid,
- 20 bis 40 Gew.-% Polyurethanprepolymere, Polysulfid, Polyether oder Silicon mit feuchtigkeitsreaktiven Gruppen,
- 0 bis 50 Gew.-% Füllstoff,
- 0 bis 35 Gew.-% Weichmacher (Quellmittel),
- 0 bis 10 Gew.-% Quellhilfsmittel,
- 0 bis 10 Gew.-% Pigmente und Farbstoffe,
- 0 bis 12 Gew.-% reaktives Polysiloxan,
- 0 bis 10 Gew.-% Stabilisierungsmittel und
- 0 bis 10 Gew.-% Katalysatoren und sonstige Hilfsstoffe enthält, wobei sich die Gew.-% auf die Dichtungsmasse insgesamt bezieht.

7. Fugendichtungsmasse nach mindestens einem der Ansprüche 1 bis 6, dadurch gekennzeichnet, daß sie
- 1 bis 5 Gew.-% eines Triglycerids,
- 25 bis 35 Gew.-% Polyurethanprepolymere,
- 15 bis 35 Gew.-% mindestens eines Füllstoffes,
- 20 bis 30 Gew.-% mindestens eines Weichmachers (Quellmittel),
- 3 bis 7 Gew.-% mindestens eines Quellhilfsmittels,
- 4 bis 9 Gew.-% mindestens eines Pigmentes oder Farbstoffes,
- 1 bis 10 Gew.-% mindestens eines reaktiven Polysiloxans,
- 1 bis 5 Gew.-% mindestens eines Stabilisierungsmittels und
- 0,01 bis 2 Gew.-% mindestens eines Katalystors oder eines sonstigen Hilfsstoffes enthält, wobei sich die Gew.-% auf die Fugendichtungsmasse insgesamt bezieht.

8. Dichtungsmasse nach mindestens einem der Ansprüche 1 bis 7, dadurch gekennzeichnet, daß als Polyurethanprepolymer ein Umsetzungsprodukt eines Polyetherpolyols mit einem Überschuß eines Diisocyanats enthalten ist.

9. Dichtungsmasse nach mindestens einem der Ansprüche 1 bis 8, dadurch gekennzeichnet, daß als quellfähige Polymerpulver Isocyanat-inerte Polymere enthalten sind.

10. Dichtungsmasse nach mindestens einem der Ansprüche 1 bis 9, dadurch gekennzeichnet, daß als Weichmacher Chlorparaffine und/oder PVC-Weichmacher enthalten sind.

11. Dichtungsmasse nach mindestens einem der Ansprüche 1 bis 10, dadurch gekennzeichnet, daß als Quellhilfsmittel organische Lösungsmittel eingesetzt werden.

12. Dichtungsmasse nach mindestens einem der Ansprüche 1 bis 11, dadurch gekennzeichnet, daß als Stabilisatoren C₈- bis C₂₀-Olefine enthalten sind.

13. Klebstoff nach mindestens einem der Ansprüche 1 bis 4 auf der Basis eines Polyurethanprepolymeren.

14. Masse nach mindestens einem der Ansprüche 1 bis 13, gekennzeichnet durch eine stabile Schaumstruktur.

15. Herstellung der Masse nach mindestens einem der Ansprüche 1 bis 14, dadurch gekennzeichnet, daß man das Triglycerid mit ca. der gleichen Menge einer weiteren Komponente unter Erwärmen sowie eventuell unter Rühren homogenisiert und diese gelartige Mischung mit den restlichen Komponenten mischt.

16. Herstellung nach Anspruch 15, dadurch gekennzeichnet, daß man
- die Komponenten vorlegt und außer dem Katalysator, dem Haftvermittler und einem Teil des Prepolymeren,
- bei schnellaufendem Rührwerk unter Vakuum auf Temperaturen von ca. 5 °C über den Schmelzpunkt des Triglycerids erhitzt,
- die Masse langsam abkühlen läßt und
- den Rest des Prepolymeren sowie den Katalysator und den Haftvermittler zumischt und homogenisiert.

17. Verwendung der Fugendichtungsmasse nach mindestens einem der Ansprüche 7 bis 12 für Fugen mit einer Breite von mehr als 35 mm und für Über-Kopf-Fugen.

## Claims

1. A moisture-curing sealing and adhesive compound based on fully synthetic polymers which, if desired, contains fillers, plasticizers and/or other additives, characterized in that it contains at least one triglyceride with no OH groups.

2. A compound as claimed in claim 1, characterized in that the triglycerides have a melting point above 40°C.

3. A compound as claimed in claim 1 or 2, characterized in that the acid components in the triglyceride are the same or different saturated fatty acids containing 8 to 26 carbon atoms with no functional groups other than the COOH groups.

4. A compound as claimed in claim 1, 2 or 3, characterized by at least one triglyceride from the following group: trimyristin, tripalmitin, 1-laurodimyristin, 1-laurodipalmitin, 2-laurodipalmitin, 1,3-dicaprinostearin, 2-palmitodistearin, 1,2-distearo-olein, 1,3-distearo-olein, 1,3-dipalmito-elaidin, 1-stearodibehenin, 1-lauro-2-myristo-3-palmitin and 1-lauro-2-myristo-3-stearin.

5. A compound as claimed in at least one of claims 1 to 4, characterized in that it contains the triglyceride in a quantity of 0.1 to 50% by weight, based on the compound as a whole.

6. A sealing compound as claimed in at least one of claims 1 to 5, characterized in that it contains
- 0.5 to 50% by weight of triglyceride,
- 20 to 40% by weight of polyurethane prepolymer, polysulfide, polyether or silicone containing moisture-reactive groups,
- 0 to 50% by weight of filler,
- 0 to 35% by weight of a plasticizer (swelling agent),
- 0 to 10% by weight of a swelling aid,
- 0 to 10% by weight of pigments and dyes,
- 0 to 12% by weight of a reactive polysiloxane,
- 0 to 10% by weight of a stabilizer and
- 0 to 10% by weight of catalysts and other auxiliaries, the percentages by weight being based on the sealing compound as a whole.

7. A jointing compound as claimed in at least one of claims 1 to 6, characterized in that it contains
- 1 to 5% by weight of a triglyceride,
- 25 to 35% by weight of polyurethane prepolymer,
- 15 to 35% by weight of at least one filler,
- 20 to 30% by weight of at least one plasticizer (swelling agent),
- 3 to 7% by weight of at least one swelling aid,
- 4 to 9% by weight of at least one pigment or dye,
- 1 to 10% by weight of at least one reactive polysiloxane,
- 1 to 5% by weight of at least one stabilizer and
- 0.01 to 2% by weight of at least one catalyst or other auxiliary,
the percentages by weight being based on the jointing compound as a whole.

8. A sealing compound as claimed in at least one of claims 1 to 7, characterized in that it contains a reaction product of a polyether polyol with an excess of a diisocyanate as the polyurethane prepolymer.

9. A sealing compound as claimed in at least one of claims 1 to 8, characterized in that it contains isocyanate-inert terminated polymers as the swellable polymer powder.

10. A sealing compound as claimed in at least one of claims 1 to 9, characterized in that it contains chloroparaffins and/or PVC plasticizers as the plasticizer.

11. A sealing compound as claimed in at least one of claims 1 to 10. characterized in that it contains organic solvents as swelling aids.

12. A sealing compound as claimed in at least one of claims 1 to 11, characterized in that it contains unbranched C₈₋₂₀ olefins as the stabilizers.

13. An adhesive as claimed in at least one of claims 1 to 4 based on a polyurethane prepolymer.

14. A compound as claimed in at least one of claims 1 to 13, characterized by a stable foam structure.

15. A process for the production of the compound claimed in at least one of claims 1 to 14, characterized in that the triglyceride is mixed while heating and optionally while stirring with about the same quantity of another component and the resulting gel-like mixture is mixed with the remaining components.

16. A process as claimed in claim 15, characterized in that
- the components are initially introduced except for the catalyst, the coupling agent and part of the prepolymer,
- are heated in vacuo to temperatures about 5°C above the melting point of the triglyceride with the stirrer rotating at high speed,
- the melt is allowed to cool slowly and
- the rest of the prepolymer is added together with the catalyst and the coupling agent and the whole is homogenized.

17. The use of the jointing compound claimed in at least one of claims 7 to 12 for joints with a width of more than 35 mm and for overhead joints.

## Revendications

1. Produit durcissant à l'humidité aux fins d'étanchéiti-cation et d'adhésion à base de polymère entièrement synthétique qui contient le cas échéant des charges, des plastifiants et/ou d'autres additifs,
caractérisé en ce qu'
il contient au moins un triglycéride sans groupe OH.

2. Produit selon la revendication 1,
caractérisé en ce que
les triglycérides ont un point de fusion supérieur à 40°C.

3. Produit selon las revendications 1 ou 2,
caractérisé en ce que
les composants acides dans le triglycéride sont des acides gras saturés identiques ou différents ayant de 8 à 26 atomes de carbone sans autres groupes fonctionnels en dehors des groupes COOH.

4. Produit selon les revendications 1, 2 ou 3,
caractérisé par au moins un triglycéride du groupe suivant : trimyristine, tripalmitine, 1-laurodimyristine, 1-lauro-dipalmitine, 2-laurodipalmitine, 1,3-dicaprinostéarine, 2-palmitodistéarine, 1,2-distéaro-oléine, 1,3-dipalmitoélaïdine, 1-stéaro-dibéhénine, -1-lauro-2-myristo-3-palmitine et 1-Lauro-2-myristo-3-stéarine.

5. Produit selon au moins l'une des revendications 1 à 4,
caractérisé en ce qu'
il contient le triglycéride en une quantité de 0,1 à 50 % en poids par rapport à la masse dans son ensemble.

6. Produit d'étanchéité selon au moins une des revendications 1 à 5,
caractérisé en ce qu'il contient
- de 0,5 à 50 % en poids de triglycérides,
- de 20 à 40 % en poids de prépolymères de polyuréthane, de polysulfure, de polyéthers ou de silicone à groupes réactifs à l'humidité,
- de 0 à 50 % en poids de charge,
- de 0 à 35 % en poids de plastifiant (agent de gonflement)
- de 0 à 10 % en poids d'adjuvant de gonflement,
- de 0 à 10 % en poids de pigments et de colorants,
- de 0 à 12 % en poids de polysiloxane réactif,
- de 0 à 10 % en poids d'agent stabilisant et,
- de 0 à 10 % en poids de catalyseurs et d'autres adjuvants, les pourcentages pondéraux se rapportant au produit d'étanchéité dans son ensemble.

7. Produit d'étanchéité pour joints selon au moins une des revendications 1 à 6,
caractérisé en ce qu'il contient
- de 1 à 5 % en poids de triglycérides,
- de 25 à 35 % en poids de prépolymères de polyuréthane,
- de 15 à 35 % en poids d'au moins une charge,
- de 20 à 30 % en poids d'au moins un plastifiant (agent de gonflement),
- de 3 à 7 % en poids d'au moins un adjuvant de gonflement,
- de 4 à 9 % en poids d'au moins un pigment colorant,
- de 1 à 10 % en poids d'au moins un polysiloxane réactif,
- de 1 à 5 % en poids d'au moins un agent stabilisant et
- de 0,01 à 2 % en poids d'au moins un catalyseur ou d'un autre additif, le pourcentage pondéral se rapportant au produit d'étanchéité pour joints dans son ensemble.

8. Produit d'étanchéité selon au moins une des revendications 1 à 7,
caractérisé en ce qu'il contient comme prépolymère de polyuréthane un produit de réaction d'un polyéther polyol avec un excès d'un diisocyanate.

9. Produit d'étanchéité selon au moins une des revendications 1 à 8,
caractérisé en ce qu'
il contient corme poudre polymère gonflable des polymères inertes vis-à-vis des isocyanates.

10. Produit d'étanchéité selon au moins une des revendications 1 à 9,
caractérisé en qu'
il contient comme plastifiant des chloroparaffines et/ou des plastifiants de PVC.

11. Produit d'étanchéité selon au moins une des revendications 1 à 10,
caractérisé en ce qu'
on utilise comme adjuvant de gonflement des solvants organiques,

12. Produit d'étanchéité selon au moins une des revendications 1 à 11,
caractérisé en ce qu'
il content comme stabilisateurs des oléfines en C₈ à C₂₀.

13. Adhésif selon au moins une des revendications 1 à 4, à base d'un prépolymère de polyuréthane.

14. Produit selon au moins une des revendications 1 à 13,
caractérisé par
une structure en mousse stable.

15. Fabrication du produit selon au moins une des revendications 1 à 14,
caractérisée en ce qu'
on homogénéise les triglycérides avec une quantité approximativement égale d'un autre composant en chauffant ainsi qu'éventuellement en agitant et en ce qu'on mélange ce mélange en forme de gel avec le reste de composants.

16. Fabrication selon la revendication 15,
caractérisée en ce que
- on dispose les composants à l'exception du catalyseur, du fixateur et d'une partie du prépolymère,
- dans un agitateur à grande vitesse on chauffe sous vide à des températures d'environ 5°C au-dessus du point de fusion du triglycéride,
- on laisse lentement refroidir le produit et
- on ajoute au mélange le reste du prépolymère ainsi que le catalyseur et le fixateur et on homogénéise.

17. Utilisation du produit d'étanchéité pour joints selon au moins l'une des revendications 7 à 12 pour les joints ayant une largeur de plus de 35 mm et pour les joints suspendus.
